# EUROPEAN PATENT SPECIFICATION

(11) **EP 4 206 512 B1**
(45) Date of publication and mention of the grant of the patent: **29.04.2026**
(21) Application number: 22216802.3
(22) Date of filing: 27.12.2022
(51) Int. Cl.: F16L 33/32, F16L 25/00

(54) **CONNECTOR FOR HOSES AND THE LIKE**
ANSCHLUSS FÜR SCHLÄUCHE UND DERGLEICHEN
RACCORD POUR TUYAUX ET ANALOGUES

(30) Priority: 30.12.2021 IT 202100033029
(43) Date of publication of application: 05.07.2023
(73) Proprietor: Euro 2000 S.p.A., 20083 Gaggiano, Frazione Vigano MI (IT)
(72) Inventor: SUNDARARAJ, Ramprasath, 20083 GAGGIANO MI (IT)
(74) Representative: Modiano, Micaela Nadia

(56) References cited:
- EP-A1- 0 728 977
- AU-A4- 2010 100 550
- DE-A1- 2 635 871
- JP-A- 2020 060 292
- US-A- 4 875 720
- US-A1- 2007 018 450

## Description

The present invention relates to a connector for hoses and the like, in particular, but not exclusively, corrugated hoses, coils and hoses of rubber or plastic.

Connectors for hoses are devices that are adapted to be fixed to one end of a hose in order to enable it to be connected to another element, like another hose or a conduit of the same type or different type, a faucet, a dispensing outlet or drain, etc.

In general connectors are substantially tubular elements that are configured to receive an end of the hose to be connected inside them.

Usually, connectors comprise a connecting end which is usually threaded or which comprises other known systems of connection; the hose to be connected is inserted into the other end, opposite from the connecting end.

Conventional connectors are differentiated mainly by the solution that is adopted for inserting and fixing, inside the connector itself, the end of the hose to be connected.

For example, connectors for hoses are known which are formed from two half-shells which are hinged longitudinally and which open up in the manner of a book, so as to be closed around the hose to be connected.

Connectors for hoses are also known which are formed from a main body, which comprises the connecting end, and a separate ring, which is screwed onto a threading at the opposite end in order to fix the hose after the latter has been inserted into the main body.

US 4 875 720 A and DE 26 35 871 A1 disclose connectors for hoses and the like, comprising a main body and a fixing ring.

Although useful and practical, these conventional connectors for hoses show some room for improvement, which include simplicity and rapidity of use.

Another aspect with room for improvement of conventional connectors for hoses is the capacity to protect the hose from external forces and interference, such as mechanical traction and vibrations, and from environmental agents such as water and dust.

The aim of the present invention is to provide a connector for hoses that is capable of solving the abovementioned problems and overcoming the abovementioned limitations of the background art.

Within this aim, an object of the present invention is to provide a connector for hoses and the like that is capable of ensuring better protection from external forces, interference, and from environmental agents.

Another object of the invention consists in providing a connector for hoses and the like that is simple and rapid to use.

Another object of the invention consists in providing a connector for hoses and the like that is easy to implement and economically competitive.

This aim and these and other objects which will become more apparent hereinafter are achieved by a connector for hoses and the like according to claim 1, optionally provided with the characteristics defined by one or more of the dependent claims.

Further characteristics and advantages of the invention will become more apparent from the detailed description of a preferred, but not exclusive, embodiment of a connector for hoses or the like, illustrated by way of non-limiting example with the aid of the accompanying drawings wherein:
Figure 1 is a perspective view of the connector for hoses and the like with the main body and the fixing ring separated;
Figure 2 is a perspective view of the connector of Figure 1 in the coupling condition;

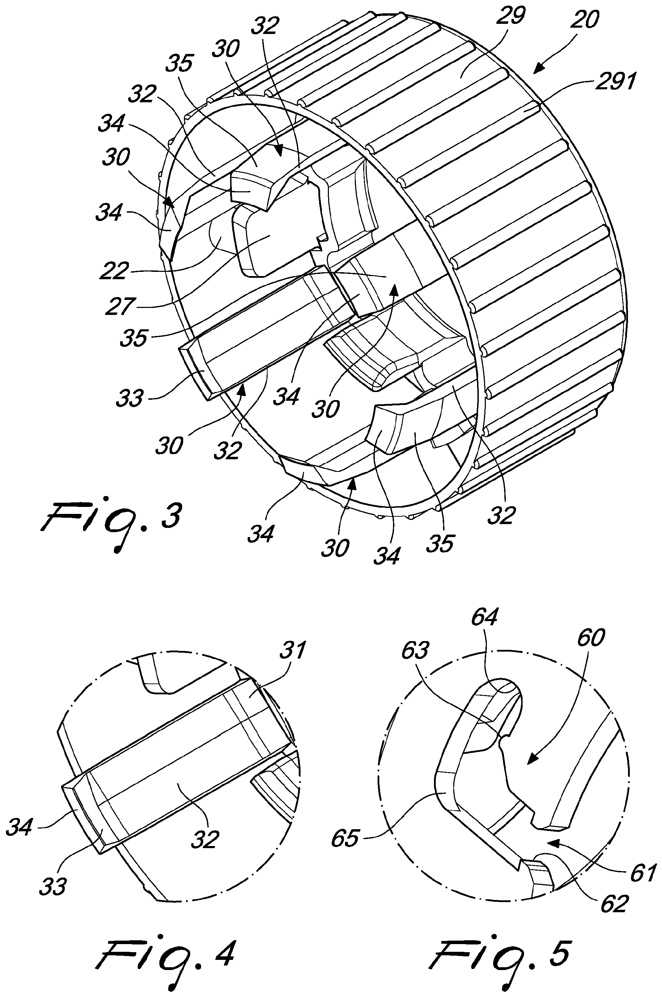

Figure 3 is a perspective view of the fixing ring;
Figure 4 is a detail of Figure 3 corresponding to one of the engagement fingers;
Figure 5 is a detail of Figure 1 corresponding to the contoured recess that is present on the main body of the connector;
Figure 6 is a front elevation view, seen from the side of the fixing ring, of the connector in the fixing configuration;
Figure 7 is an enlarged detail of Figure 8;
Figure 8 is a cross-sectional view taken along the line marked VIII-VIII in Figure 6;
Figure 9 is a front elevation view, seen from the side of the fixing ring, of the connector in the non-fixing configuration;
Figure 10 is an enlarged detail of Figure 11;
Figure 11 is a cross-sectional view taken along the line marked XI-XI in Figure 9;

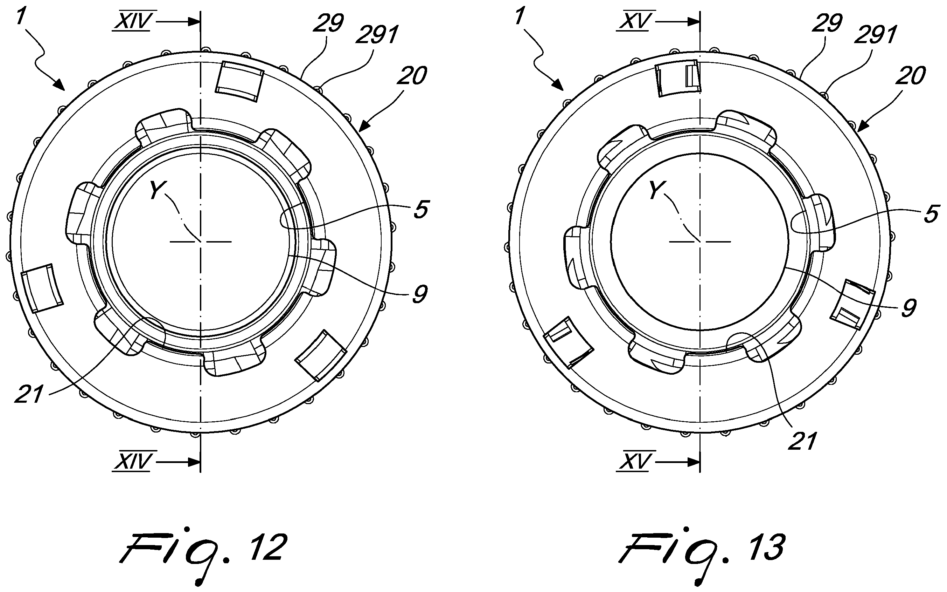

Figure 12 is a front elevation view, seen from the side of the fixing ring, of the connector in the fixing configuration with a hose inserted;
Figure 13 is a front elevation view, seen from the side of the fixing ring, of the connector in the non-fixing configuration with a hose inserted;
Figure 14 is a cross-sectional view taken along the line marked XIV-XIV in Figure 12;
Figure 15 is a cross-sectional view taken along the line marked XV-XV in Figure 13.

With reference to the figures, the connector for hoses and the like, in particular, but not exclusively, corrugated hoses, rubber or plastic hoses in general and coils, is generally designated by the reference numeral 1.

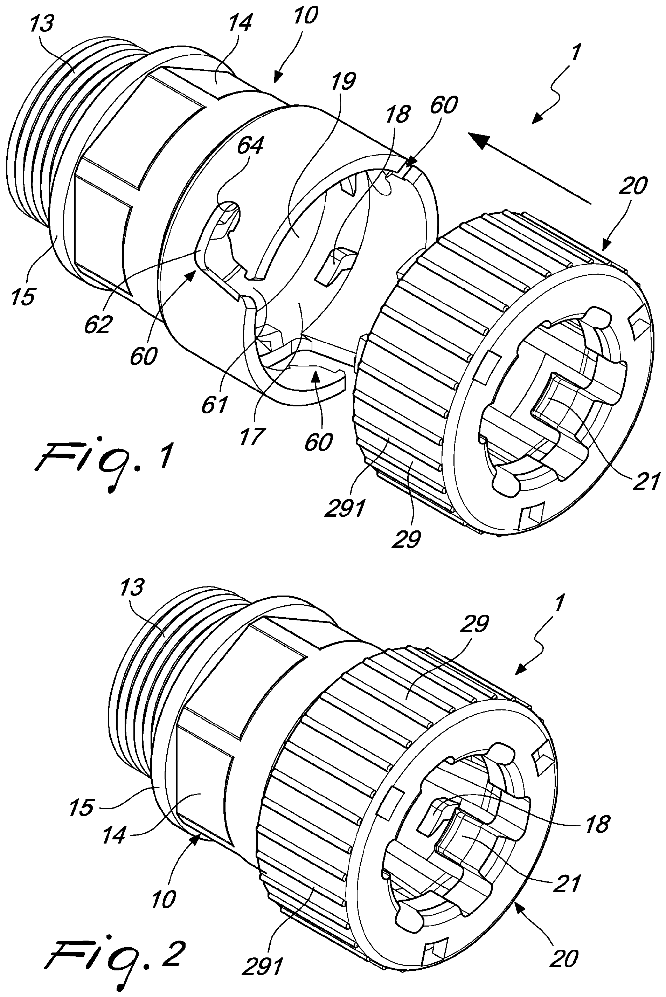

The connector 1 for hoses comprises a main body 10 and a fixing ring 20 which is adapted to be coupled mechanically to said main body 10 in a coupling condition, illustrated for example in Figures 2, 8 and 11.

In the coupling condition the fixing ring 20 and the main body 10 form a complete body of the connector 1 which defines inside it a through tunnel 5 which extends along a longitudinal axis Y and which is configured to accommodate one end of a hose 9 or the like.

Note also that both the fixing ring 20 and the main body 10 define a respective longitudinal through tunnel inside them, the main body 10 being a substantially tubular element and the ring 20 being a substantially annular element.

Below and in the accompanying claims, "longitudinal axis Y" refers to the central longitudinal axis of the through tunnel 5 when the connector is in the coupling condition.

Conveniently, the main body 10 comprises a connecting end 13, which is adapted to be connected to another external element (for example another hose or tubing, or another connector, or a faucet or a dispensing outlet or drain, etc.), preferably provided with threading. This connecting end can be made with different conventional shapes and structures, with or without threading, as required, for example as a male element, a female element, a rotating male element, a rotating female element, with metallic inserts, bayonet-style coupling, etc. In general the connecting end 13 can comprise any conventional mechanical connection system.

The main body 10 preferably comprises a clamping portion 14, which preferably comprises an outer hexagonal surface and is adapted to enable the main body 10 to be tightened by screwing on the outer element (for example using a utensil).

Optionally, the main body 10 comprises an external annular shoulder 15 which is adapted to act as an abutment for a gasket, which in the embodiment illustrated is positioned between the connecting end 13 and the clamping portion 14.

According to the invention, the main body 10 comprises one or more contoured fixing recesses 60.

These contoured recesses 60 are provided at the proximal end (the end opposite the connecting end 13) of the main body 10, i.e. the end that is adapted to be coupled with the fixing ring 20; preferably the contoured recesses 60 are arranged on a portion with a larger diameter than the rest of the main body 10.

At the proximal end of the main body 10 there is an entry mouth around which, in the coupling condition, the fixing ring 20 is partially inserted.

Note that the fixing ring 20 comprises an outer knurled ring 29 which, in the coupling condition, fits externally over the proximal end of the main body 10 (i.e. on the portion of larger diameter) and an internal portion which, in the coupling condition, is at least partially inserted in the main body 10 and which rotates integrally with the outer knurled ring 29, said internal portion comprising the engagement fingers 30 which will be described below.

The outer knurled ring 29 is adapted to be gripped or held with the hands by an operator in order to be rotated (and therefore in order to induce the rotation of the entire fixing ring 20) and to this end it preferably comprises longitudinal ribs 291 or a milling or other elements that facilitate gripping.

According to the invention, the main body 10 comprises an inclined surface 17 which is internal to the main body 10, and more precisely a surface inclined toward the longitudinal axis Y in the direction of the connecting end 13, preferably a frustum-shaped surface.

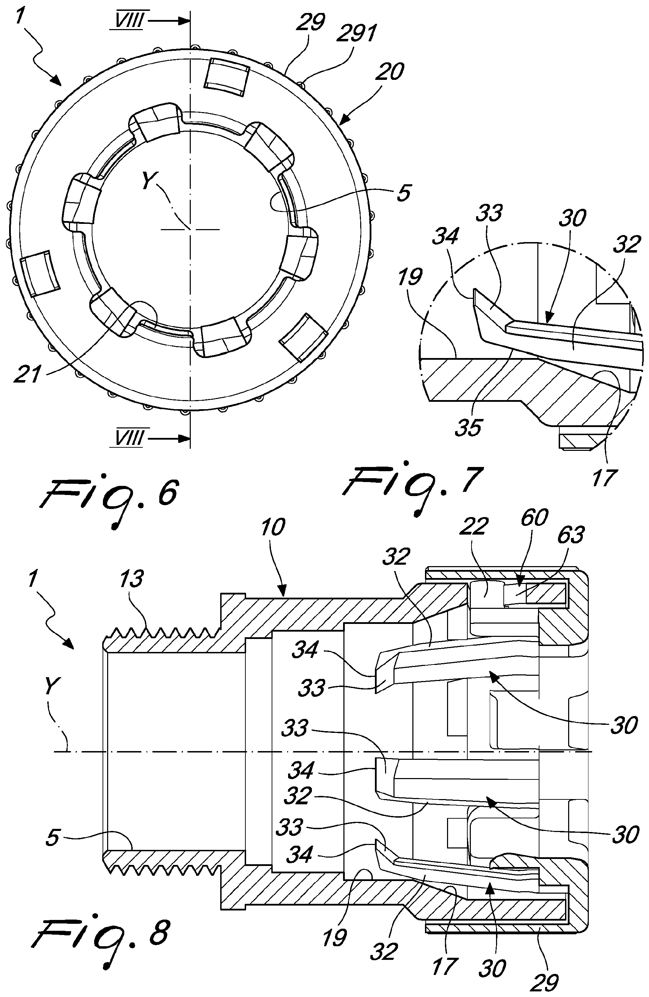

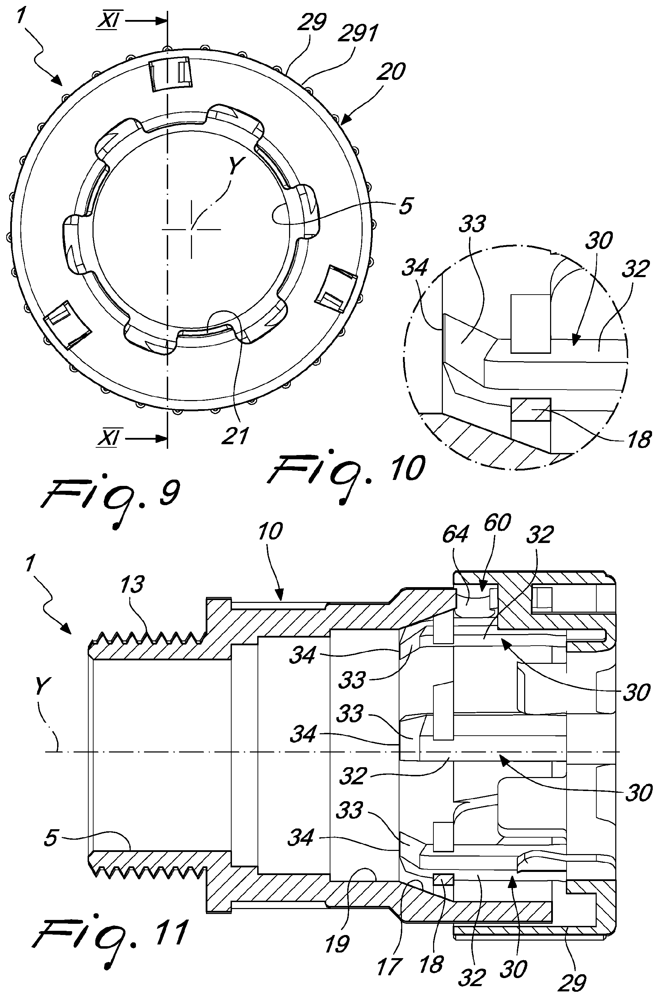

According to the invention, the fixing ring 20 comprises a plurality of engagement fingers 30 which protrude longitudinally (or substantially in parallel to the longitudinal axis Y) and are transversely flexible in the direction of the longitudinal axis Y at least up to a fixing configuration in which they engage the hose 9 (if this is present and inserted in the through tunnel 5). In the fixing configuration (Figures 7, 8 and 14), the distal ends of the engagement fingers 30 are closer together (and therefore arranged along a circumference of a smaller diameter) than in the non-fixing configuration (Figures 10, 11 and 15).

Conveniently, the engagement fingers 30 are fixed internally to the outer knurled ring 29 and extend outside the latter.

Preferably, the engagement fingers 30 are arranged around the longitudinal axis Y and equidistant from it (substantially along an ideal cylindrical surface) and, even more preferably, angularly equidistant from each other.

In the embodiment illustrated, there are six engagement fingers 30, angularly equidistant from each other.

Conveniently, the engagement fingers 30 are made of elastically flexible material, such as for example plastic material.

In more detail, in the preferred embodiments, each one of the engagement fingers 30 comprises a longitudinally-extended slider body 32 and, in the distal portion thereof, an external angular surface 35 inclined toward the longitudinal axis Y in the direction of the connecting end 13 (when in the coupling condition). At the distal end of the slider body 32 there is a wedge-shaped end 33 which protrudes transversely inward (toward the longitudinal axis Y) and has, on its distal face, an abutment surface 34 which extends transversely (substantially perpendicular to the longitudinal axis Y as can be seen in Figures 10 and 11). This abutment surface 34 acts as a stop element for the hose 9 when the connector 1 is in the fixing configuration.

The engagement fingers 30 comprise at least one elastic element or at least one elastic portion 31 which enables said engagement fingers 30 to bend or in any case incline inward so that the distal ends of the fingers 30 move toward each other, when subjected to a mechanical force in a radial, centripetal direction, and then return to the initial position in the absence of forces.

In use, the force that induces the bending of the engagement fingers 30 in order to obtain the locked configuration is given by the interaction of the engagement fingers 30 with the inclined surface 17 which is internal to the main body 10, the former being configured to interact mechanically with the engagement fingers 30 so as to induce the bending thereof toward the fixing configuration, as can be seen in particular in Figure 7. In more detail, when the fixing ring 20 is moved along the longitudinal axis Y toward the inside of the main body 10, the external angular surface 35 of the engagement fingers 30 come into contact with the inclined surface 17 and therefore, by virtue of the inclined plane, a centripetal radial force (deflection) is produced on the engagement fingers 30.

According to the invention, the fixing ring 20 also comprises one or more fixing pins 22 which in the coupling condition each occupy a respective contoured fixing recess 60.

In the embodiment illustrated, there are three fixing pins 22 in the ring 20 and three respective contoured fixing recesses 60 in the main body 10.

Conveniently, the fixing pins 22 protrude transversely, outward with respect to the longitudinal axis Y, from the internal portion of the ring 20 toward the outer knurled ring 29 and preferably they are supported by respective supporting tabs or plates 27 which extend longitudinally.

In the preferred embodiments, including the illustrated embodiment, the contoured fixing recess 60 extends substantially in an L-shape and has, at an (outermost) first end, an inlet 61 with a taper that is configured to allow the entry of the fixing pin 22 and to block its exit, basically creating an undercut, in substance providing a one-way entry for the fixing pin 22; in practice, by inserting the fixing pins 22 into the inlets 61 of the respective contoured fixing recesses 60 the coupling condition is obtained, engaging the fixing ring 20 with the main body 10; note that in the coupling condition the connector 1 is not necessarily in the fixing configuration: the connector 1 can be in the coupling condition and in a non-fixing configuration, in which the hose 9 can be moved and extracted from the connector 1, as shown in Figures 10, 11 and 15. In order to obtain the fixing configuration (Figures 7, 8 and 14), the fixing ring 20 must be moved longitudinally toward the inside of the main body 10 in order to induce the bending toward the center of the engagement fingers 30, as described below.

Also in the preferred embodiments, the contoured fixing recess 60 has, at a second end (innermost with respect to the first end), a fixing seat 64 adapted to be occupied by the fixing pin 22 in the fixing configuration.

Advantageously, a pin locking protrusion 63 is present at the inlet of the fixing seat 64 and is configured to interfere with the fixing pin 22, thus creating a resistance to the exit thereof from the fixing seat 64 which can be defeated with the application of an appropriate force.

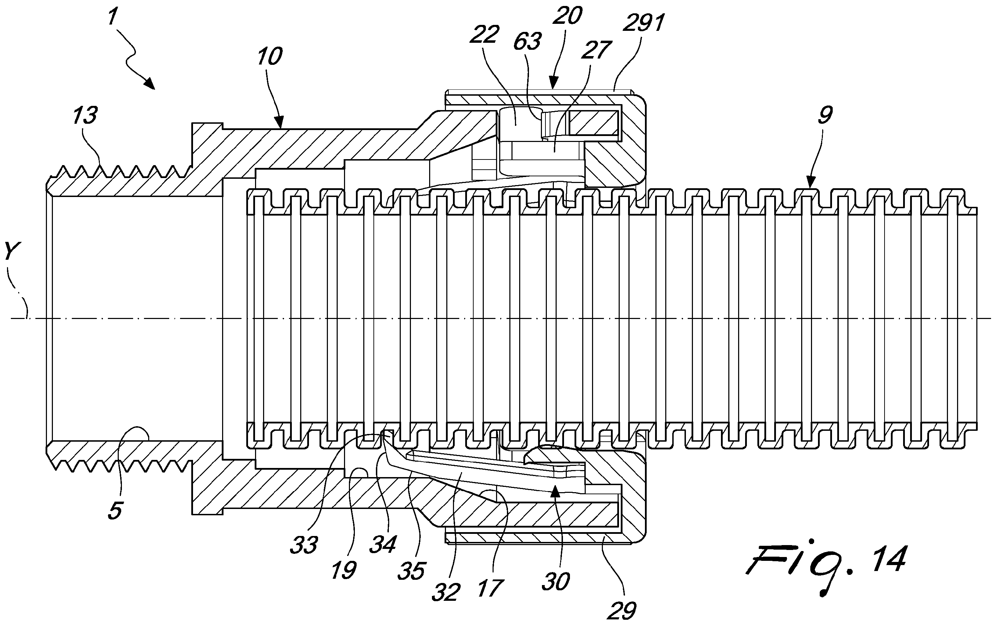

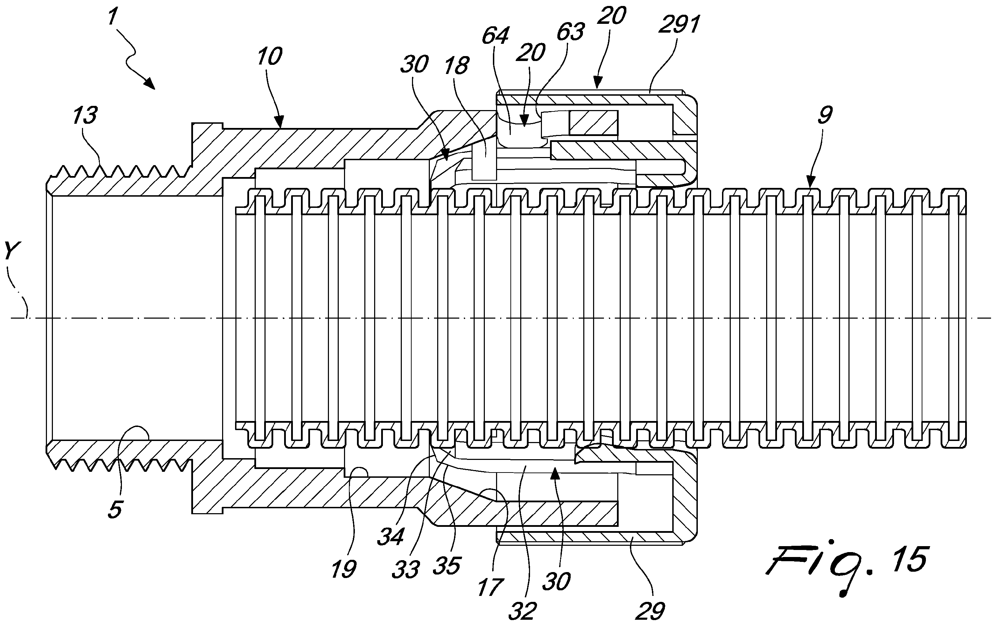

The internal profile 65 of the contoured fixing recess 60 preferably comprises curved and/or rounded surfaces, and this contoured fixing recess 60 is shaped so that, in the coupling condition, by rotating the fixing ring 20 in one direction (for example clockwise) the fixing pins 22 are induced to move toward the fixing seat 64 until they occupy it and consequently (since the fixing seat 64 is in the innermost part) the movement of the entire fixing ring 20 is induced, along the longitudinal axis Y, toward the inside of the main body 10 and so the interaction of the engagement fingers 30 with the inclined surface 17 (and their movement toward each other) is induced, until the fixing configuration is reached; by contrast, by rotating the ring 20 in the opposite direction (for example anticlockwise), said ring 20 is induced to move along the longitudinal axis Y in the opposite direction, toward the outside, and this results in the transition from the fixing configuration (Figure 14) to the non-fixing configuration (Figure 15), while the connector 1 remains in the coupling condition.

According to an optional and advantageous characteristic, the main body 10 comprises one or more guide elements 18 for the engagement fingers 30, preferably one for each engagement finger 30; these guide elements 18 are positioned and shaped to guide the sliding of the engagement fingers 30 in a longitudinal direction during the transition from the non-fixing configuration to the fixing configuration.

In the preferred embodiments, including the illustrated embodiment, the guide elements 18 are substantially L-shaped or arc-shaped or in any case shaped complementarily to the slider body 32 of the engagement fingers 30 so as to allow and guide its sliding.

Advantageously, the guide elements 18 are positioned at the outermost end of the inclined surface 17.

According to an optimal solution, the main body 10 comprises, inside it, a cylindrical surface 19 which is centered around the longitudinal axis Y, contiguous with the inclined surface surface 17, downstream of the latter (innermost and closer to the connecting end 13); in this manner, in the fixing configuration, it is possible to push the hose 9 toward the inside of the main body 10, in so doing making the engagement fingers 30 bend outward and making the hose 9 slide along the wedge-shaped end 33 which has an inner inclined face, while the movement of the hose 9 in the opposite direction is prevented.

The locking is particularly effective when the hose 9 has external circumferential knurling or ridges, as in the case of corrugated hoses, when, as shown in Figure 14, the flat abutment surface 34 of the fingers 30 abuts against the circumferential ridges of the hose 9.

Optionally, the fixing ring 20 comprises a series of positioning profiles 21, which are positioned circumferentially inside the ring 20, at the entrance of the through tunnel 5, and protrude toward the longitudinal axis Y. The function of these positioning profiles 21 is to maintain the hose 9 in position and stabilize it when it is inserted in the connector 1 and to this end, preferably, on the top they have a concave surface which is complementary to a cylindrical hose 9.

With regard to materials, the main body 10 can be made of a single material, preferably polymeric (for example: PVC, nylon, special plastic or bi-component plastic etc.) or of two or more different materials, for example with the threaded connecting end 13 made of metallic material (for example: nickel-plated brass, stainless steel etc.) and the rest of the body made of polymeric material. The fixing ring 20 is preferably made entirely from polymeric material (for example: PVC, nylon, special plastic etc.).

The operation of the connector 1 is clear and evident from the foregoing description and can be summed up as follows.

At first use, the connector 1 can be assembled by coupling the main body 10 and the fixing ring 20 together: to do this it is sufficient to push the internal portion of the ring 20 into the main body, in so doing making each one of the fixing pins 22 pass into the inlet 61 of a corresponding contoured fixing recess 60. In this manner the ring 20 is stably joined to the main body 10, the egress of the fixing pin 22 from the shape of the inlet 61 being prevented.

In order to obtain the fixing configuration, it is sufficient to push and rotate the ring 20 so as to make the fixing pins 22 advance along the profile of the corresponding contoured fixing recess 60 until they are inserted in the fixing seat 64.

With the connector 1 in the coupling condition and in the fixing configuration, it is possible to insert the hose 9 through the through tunnel 5 along the longitudinal axis Y, from the end with the ring 20. The hose 9 will push the engagement fingers 30 on the inclined surface of the wedge-shaped end 33 and it can then be forcibly moved through the engagement fingers 30 in the direction of the connecting end 13. Movement in the opposite direction (extraction) of the hose 9 is prevented by the flat abutment surface 34 of the engagement fingers 30.

To remove the hose 9, it is necessary to transition to the non-fixing configuration, in which the engagement fingers 30 are open (i.e. with the ends 34 spaced further apart from each other); in order to transition to this non-fixing configuration it is sufficient to rotate the ring 20, by acting manually on the outer knurled ring 29. By rotating the ring 20, the locking pin 22 exits from the fixing seat 64 and follows the profile of the contoured fixing recess 60 and the ring 20 exits moving longitudinally. At the same time, the slider body 32 of the engagement fingers 30 slides under the respective guide element 18 and the fingers open out (their distal ends move mutually further away), freeing the hose 9.

In practice it has been found that the connector for hoses and the like according to the present invention achieves the intended aim and objects, in that it is capable of ensuring optimal protection from external forces, interference, and from environmental agents.

Another advantage of the connector for hoses and the like according to the invention consists in that it is simple and rapid to use.

Another advantage of the connector for hoses and the like according to the invention consists in that it is easy to implement and economically competitive.

The connector for hoses and the like thus conceived is susceptible of numerous modifications and variations, within the scope of the appended claims.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A connector (1) for hoses and the like, which comprises a main body (10) and a fixing ring (20) which is adapted to be coupled mechanically to the main body (10) in a coupling condition in which the fixing ring (20) and the main body (10) form a complete body of the connector (1) which defines inside it a through tunnel (5) which extends along a longitudinal axis (Y) and which is configured to accommodate one end of a hose (9) or the like;
wherein said main body (10) comprises one or more contoured fixing recesses (60) and an inclined surface (17) which is internal to said main body (10), and said fixing ring (20) comprises
one or more fixing pins (22), which in said coupling condition each occupy a respective said contoured fixing recess (60);
**characterized in that** said fixing ring (20) further comprises:
- a plurality of engagement fingers (30) which protrude longitudinally and are transversely flexible in the direction of the longitudinal axis (Y) at least up to a fixing configuration in which they engage said hose (9) when it is inserted in the through tunnel (5), thus preventing its movement out of the connector (1);
said inclined surface (17) being configured to interact mechanically with said engagement fingers (30) so as to induce the bending thereof toward said fixing configuration when the fixing ring (20) is moved along the longitudinal axis (Y),
wherein, when said engagement fingers (30) are in said fixing configuration, said inclined surface (17) is in contact at a single point, in the direction along the longitudinal axis (Y), with each of said engagement fingers (30).

2. The connector (1) according to claim 1, **characterized in that** said contoured fixing recess (60) extends substantially in an L-shape and has:
- at a first end, an inlet (61) with a taper that is configured to allow the entry of the fixing pin (22) and to block its exit,
- at a second end, a fixing seat (64) adapted to be occupied by the fixing pin (22) in said fixing configuration.

3. The connector (1) according to claim 2, **characterized in that** a pin locking protrusion (63) is present at the inlet of the fixing seat (64) and is configured to interfere with the fixing pin (22), thus creating a resistance to the exit thereof from the fixing seat (64).

4. The connector (1) according to claim 2 or 3, **characterized in that** the contoured fixing recess (60) is shaped so that, in the coupling condition, by pushing the fixing ring (20) along the longitudinal axis (Y) inward into the main body (10) the fixing pins (22) are induced to move toward the fixing seat (64) until they occupy it and consequently the clockwise rotation of the fixing ring (20) along the longitudinal axis (Y) toward the inside of the main body (10) is induced, thus obtaining the fixing configuration; by rotating the fixing ring (20) in a direction that is opposite with respect to the previous direction, said ring (20) is induced to move along the longitudinal axis (Y) in the opposite direction, thus obtaining the transition to a non-fixing configuration.

5. The connector (1) according to one or more of the preceding claims, **characterized in that** each one of the engagement fingers (30) comprises a longitudinally-extended slider body (32) and an external angular surface (35) inclined toward the longitudinal axis (Y); wherein said inclined surface (17) is adapted to come into contact with said external angular surface (35) so as to induce the bending of the engagement fingers (30) toward the longitudinal axis (Y).

6. The connector (1) according to the preceding claim, **characterized in that** the engagement fingers (30) comprise, at a distal end of the slider body (32), a wedge-shaped end (33) which protrudes transversely inward and has, on its distal face, an abutment surface (34) which extends transversely and acts as a stop element for the hose (9), thus preventing its exit from the connector (1), when the connector (1) is in the fixing configuration and the hose (9) is inserted.

7. The connector (1) according to one or more of the preceding claims, **characterized in that** the main body (10) comprises one or more guide elements (18) for the engagement fingers (30), preferably one for each engagement finger (30); said guide elements (18) being positioned and shaped to guide the sliding of the engagement fingers (30) in a longitudinal direction during the transition from the non-fixing configuration to the fixing configuration.

8. The connector (1) according to one or more of the preceding claims, **characterized in that** the main body (10) comprises, inside it, a cylindrical surface (19) which is contiguous to the inclined surface (17), downstream of it.

9. The connector (1) according to one or more of the preceding claims, **characterized in that** the fixing ring (20) comprises a series of positioning profiles (21) which are positioned circumferentially inside the ring (20) and protrude toward the longitudinal axis (Y).

10. The connector (1) according to one or more of the preceding claims, **characterized in that** the main body (10) comprises an external annular shoulder (15) which is adapted to act as an abutment for a gasket.

## Patentansprüche

1. Ein Anschluss (1) für Schläuche und dergleichen, der einen Hauptkörper (10) und einen Befestigungsring (20) umfasst, welcher ausgebildet ist, um mechanisch mit dem Hauptkörper (10) in einem Kopplungszustand gekoppelt zu werden, in welchem der Befestigungsring (20) und der Hauptkörper (10) einen Gesamtkörper des Anschlusses (1) bilden, der in seinem Inneren einen Durchgang (5) bestimmt, welcher sich entlang einer Längsachse (Y) erstreckt und ausgebildet ist, um ein Ende eines Schlauchs (9) oder dergleichen aufzunehmen;
wobei der Hauptkörper (10) eine oder mehrere konturierte Befestigungseinbuchtungen (60) und eine schräge Oberfläche (17) umfasst, die innerhalb des Hauptkörpers (10) liegt, und der Befestigungsring (20) einen oder mehrere Befestigungsstifte (22) umfasst, die in dem Kopplungszustand jeweils eine entsprechende konturierte Befestigungseinbuchtung (60) einnehmen;
**dadurch gekennzeichnet, dass** der Befestigungsring (20) weiter Folgendes umfasst:
- eine Vielzahl von Eingriffsfingern (30), die in Längsrichtung vorstehen und transversal in Richtung der Längsachse (Y) mindestens bis zu einer Befestigungsanordnung biegsam sind, in welcher sie in den Schlauch (9) eingreifen, wenn er in den Durchgang (5) eingeführt ist, und so seine Bewegung aus dem Anschluss (1) heraus verhindern;
wobei die schräge Oberfläche (17) ausgebildet ist, um mechanisch mit den Eingriffsfingern (30) zusammenzuwirken, um deren Biegung in die Befestigungsanordnung zu veranlassen, wenn der Befestigungsring (20) die Längsachse (Y) entlangbewegt wird, wobei die schräge Oberfläche (17) in Richtung der Längsachse (Y) an einem einzelnen Punkt mit jedem der Eingriffsfinger (30) in Kontakt ist, wenn die Eingriffsfinger (30) sich in der Befestigungsanordnung befinden.

2. Der Anschluss (1) gemäß Anspruch 1, **dadurch gekennzeichnet, dass** die konturierte Befestigungseinbuchtung (60) sich im Wesentlichen in L-Form erstreckt und Folgendes hat:
- an einem ersten Ende, einen Einlass (61) mit einer Verjüngung, die ausgebildet ist, um das Eindringen des Befestigungsstifts (22) zu ermöglichen und seinen Austritt zu blockieren,
- an einem zweiten Ende, einen Befestigungssitz (64), ausgebildet, um in der Befestigungsanordnung vom Befestigungsstift (22) eingenommen zu werden.

3. Der Anschluss (1) gemäß Anspruch 2, **dadurch gekennzeichnet, dass** sich ein Stift-Verriegelungsvorsprung (63) am Einlass des Befestigungssitzes (64) befindet und ausgebildet ist, um den Befestigungsstift (22) zu behindern und so einen Widerstand gegenüber dem Austritt desselben aus dem Befestigungssitz (64) zu erzeugen.

4. Der Anschluss (1) gemäß Anspruch 2 oder 3, **dadurch gekennzeichnet, dass** die konturierte Befestigungseinbuchtung (60) so geformt ist, dass im Kopplungszustand, durch Schieben des Befestigungsrings (20) entlang der Längsachse (Y) nach innen in den Hauptkörper (10), die Befestigungsstifte veranlasst werden, sich zum Befestigungssitz (64) hin zu bewegen, bis sie ihn einnehmen, und folglich die Drehung des Befestigungsrings (20) entlang der Längsachse (Y) im Uhrzeigersinn zur Innenseite des Hauptkörpers (10) ausgelöst wird, wodurch die Befestigungsanordnung eingenommen wird; durch Drehen des Befestigungsrings (20) in eine Richtung, die der zuvor genannten entgegengesetzt ist, wird der Ring (20) veranlasst, sich entlang der Längsachse (Y) in die entgegengesetzte Richtung zu bewegen, wodurch der Übergang in eine Nicht-Befestigungs-Anordnung erzielt wird.

5. Der Anschluss (1) gemäß einem oder mehreren der obigen Ansprüche, **dadurch gekennzeichnet, dass** jeder der Eingriffsfinger (30) einen sich in Längsrichtung erstreckenden Schieberkörper (32) und eine externe winklige Oberfläche (35) umfasst, die zur Längsachse (Y) hin geneigt ist; wobei die schräge Oberfläche (17) ausgebildet ist, um in Kontakt mit der externen winkligen Oberfläche (35) zu kommen und so das Biegen der Eingriffsfinger (30) zur Längsachse (Y) hin auszulösen.

6. Der Anschluss (1) gemäß dem obigen Anspruch, **dadurch gekennzeichnet, dass** die Eingriffsfinger (30) an einem distalen Ende des Schieberkörpers (32) ein keilförmiges Ende (33) umfassen, welches transversal nach innen ragt und auf seiner distalen Seite eine Widerlagerfläche (34) hat, die sich transversal erstreckt und als Anschlagelement für den Schlauch (9) dient, wodurch sein Austritt aus dem Anschluss (1) verhindert wird, wenn der Anschluss (1) sich in der Befestigungsanordnung befindet und der Schlauch (9) eingeführt ist.

7. Der Anschluss (1) gemäß einem oder mehreren der obigen Ansprüche, **dadurch gekennzeichnet, dass** der Hauptkörper (10) einen oder mehrere Führungselemente (18) für die Eingriffsfinger (30), vorzugsweise eins für jeden Eingriffsfinger (30), umfasst; wobei die Führungselemente (18) positioniert und geformt sind, um während des Übergangs von der Nicht-Befestigungs-Anordnung in die Befestigungsanordnung das Gleiten der Eingriffsfinger (30) in eine Längsrichtung zu führen.

8. Der Anschluss (1) gemäß einem oder mehreren der obigen Ansprüche, **dadurch gekennzeichnet, dass** der Hauptkörper (10) in seinem Inneren eine zylindrische Oberfläche (19) umfasst, die an die schräge Oberfläche (17) angrenzt, stromabwärts von ihr.

9. Der Anschluss (1) gemäß einem oder mehreren der obigen Ansprüche, **dadurch gekennzeichnet, dass** der Befestigungsring (20) eine Reihe von Positionierprofilen (21) umfasst, die in Umfangsrichtung innerhalb des Rings (20) positioniert sind und zur Längsachse (Y) hin vorstehen.

10. Der Anschluss (1) gemäß einem oder mehreren der obigen Ansprüche, **dadurch gekennzeichnet, dass** der Hauptkörper (10) eine externe ringförmige Schulter (15) umfasst, die ausgebildet ist, um als Widerlager für eine Dichtung zu dienen.

## Revendications

1. Raccord (1) pour tuyaux et analogues, qui comprend un corps principal (10) et une bague de fixation (20) qui est adaptée pour être couplée mécaniquement au corps principal (10) dans une condition de couplage dans laquelle la bague de fixation (20) et le corps principal (10) forment un corps complet du raccord (1) qui définit à l'intérieur de celui-ci un tunnel traversant (5) qui s'étend le long d'un axe longitudinal (Y) et qui est configuré pour recevoir une extrémité d'un tuyau (9) ou similaire ;
où ledit corps principal (10) comprend un ou plusieurs évidements de fixation profilés (60) et une surface inclinée (17) qui est interne audit corps principal (10), et
ladite bague de fixation (20) comprend une ou plusieurs broches de fixation (22), qui, dans ladite condition de couplage, occupent chacune un évidement de fixation profilé respectif (60) ;
**caractérisé en ce que** ladite bague de fixation (20) comprend en outre :
- une pluralité de doigts d'engagement (30) qui font saillie longitudinalement et sont flexibles transversalement dans la direction de l'axe longitudinal (Y) au moins jusqu'à une configuration de fixation dans laquelle ils s'engagent avec ledit tuyau (9) lorsqu'il est inséré dans le tunnel traversant (5), empêchant ainsi son mouvement hors du raccord (1) ;
ladite surface inclinée (17) étant configurée pour interagir mécaniquement avec lesdits doigts d'engagement (30) de manière à induire leur flexion vers ladite configuration de fixation lorsque la bague de fixation (20) est déplacée le long de l'axe longitudinal (Y),
où, lorsque lesdits doigts d'engagement (30) sont dans ladite configuration de fixation, ladite surface inclinée (17) est en contact en un seul point, dans la direction le long de l'axe longitudinal (Y), avec chacun desdits doigts d'engagement (30).

2. Le raccord (1) selon la revendication 1, **caractérisé en ce que** ledit évidement de fixation profilé (60) s'étend sensiblement en forme de L et comporte :
- à une première extrémité, une entrée (61) avec un cône qui est configuré pour permettre l'entrée de la broche de fixation (22) et pour bloquer sa sortie,
- à une deuxième extrémité, un siège de fixation (64) adapté pour être occupé par la broche de fixation (22) dans ladite configuration de fixation.

3. Le raccord (1) selon la revendication 2, **caractérisé en ce qu'**une saillie de verrouillage de broche (63) est présente à l'entrée du siège de fixation (64) et est configurée pour interférer avec la broche de fixation (22), créant ainsi une résistance à sa sortie du siège de fixation (64).

4. Le raccord (1) selon la revendication 2 ou 3,
**caractérisé en ce que** l'évidement de fixation profilé (60) est formé de telle sorte que, dans la condition de couplage, en poussant la bague de fixation (20) le long de l'axe longitudinal (Y) vers l'intérieur dans le corps principal (10), les broches de fixation (22) sont amenées à se déplacer vers le siège de fixation (64) jusqu'à ce qu'elles l'occupent et, par conséquent, la rotation dans le sens horaire de la bague de fixation (20) le long de l'axe longitudinal (Y) vers l'intérieur du corps principal (10) est induite, obtenant ainsi la configuration de fixation ; en tournant la bague de fixation (20) dans une direction opposée à la direction précédente, ladite bague (20) est amenée à se déplacer le long de l'axe longitudinal (Y) dans la direction opposée, obtenant ainsi la transition vers une configuration de non-fixation.

5. Le raccord (1) selon une ou plusieurs des revendications précédentes, **caractérisé en ce que** chacun des doigts d'engagement (30) comprend un corps coulissant (32) s'étendant longitudinalement et une surface angulaire externe (35) inclinée vers l'axe longitudinal (Y) ; où ladite surface inclinée (17) est adaptée pour entrer en contact avec ladite surface angulaire externe (35) de manière à induire la flexion des doigts d'engagement (30) vers l'axe longitudinal (Y).

6. Le raccord (1) selon la revendication précédente, **caractérisé en ce que** les doigts d'engagement (30) comprennent, à une extrémité distale du corps coulissant (32), une extrémité en forme de coin (33) qui fait saillie transversalement vers l'intérieur et comporte, sur sa face distale, une surface de butée (34) qui s'étend transversalement et agit comme un élément d'arrêt pour le tuyau (9), empêchant ainsi sa sortie du raccord (1), lorsque le raccord (1) est dans la configuration de fixation et le tuyau (9) est inséré.

7. Le raccord (1) selon une ou plusieurs des revendications précédentes, **caractérisé en ce que** le corps principal (10) comprend un ou plusieurs éléments de guidage (18) pour les doigts d'engagement (30), de préférence un pour chaque doigt d'engagement (30) ; lesdits éléments de guidage (18) étant positionnés et formés de manière à guider le glissement des doigts d'engagement (30) dans une direction longitudinale pendant la transition de la configuration de non-fixation à la configuration de fixation.

8. Le raccord (1) selon une ou plusieurs des revendications précédentes, **caractérisé en ce que** le corps principal (10) comprend, à l'intérieur, une surface cylindrique (19) qui est contiguë à la surface inclinée (17), en aval de celle-ci.

9. Le raccord (1) selon une ou plusieurs des revendications précédentes, **caractérisé en ce que** la bague de fixation (20) comprend une série de profils de positionnement (21) qui sont positionnés circonférentiellement à l'intérieur de la bague (20) et font saillie vers l'axe longitudinal (Y).

10. Le raccord (1) selon une ou plusieurs des revendications précédentes, **caractérisé en ce que** le corps principal (10) comprend un épaulement annulaire externe (15) qui est adapté pour servir de butée pour un joint d'étanchéité.
